# EUROPÄISCHE PATENTSCHRIFT

(11) **EP 2 457 129 B1**
(45) Veröffentlichungstag und Bekanntmachung des Hinweises auf die Patenterteilung: **13.11.2013**
(21) Anmeldenummer: 10740524.3
(22) Anmeldetag: 20.07.2010
(51) Int. Cl.: G05B 19/042, G06F 9/48, G06F 11/34

(54) **VERFAHREN ZUR ÜBERPRÜFUNG DER ECHTZEITFÄHIGKEIT EINES BETRIEBSSYSTEMS**
METHOD FOR TESTING THE REAL-TIME CAPABILITY OF AN OPERATING SYSTEM
PROCÉDÉ DE CONTRÔLE DE LA CAPACITÉ EN TEMPS RÉEL D'UN SYSTÈME DE COMMANDE

(43) Veröffentlichungstag der Anmeldung: 30.05.2012
(73) Patentinhaber: Siemens Aktiengesellschaft, 80333 München (DE)
(72) Erfinder: KYDLES, Jens, 90419 Nürnberg (DE); WALTER, Markus, 96050 Bamberg (DE)
(86) Internationale Anmeldenummer: PCT/EP2010/004431
(87) Internationale Veröffentlichungsnummer: WO 2012/010182

(56) Entgegenhaltungen:
- DE-A1- 10 140 675
- US-A1- 2007 245 054

## Beschreibung

Speicherprogrammierbare Steuerungen sind Geräte, das zur Steuerung oder Regelung einer Maschine oder Anlage eingesetzt wird.

Eine der Kernanforderungen an Steuerungen der oben genannten Art ist die Echtzeitfähigkeit. Echtzeit bedeutet dabei dass ein System auf ein Ereignis innerhalb eines vorgegebenen Zeitrahmens reagieren muss, also in der Zeit, die Abläufe in der realen Welt verbrauchen.

Mittlerweile existieren auch Systeme der genannten Art, die auf modernen PC-Systemen ablauffähig sind. Diese garantieren systemseitig über ein Echtzeitbetriebssystem, also ein Betriebssystem mit zusätzlichen Echtzeit-Funktionen für die unbedingte Einhaltung von Zeitbedingungen und die Vorhersagbarkeit des Prozessverhaltens, ein Echtzeitverhalten von z.B. bis zu 500 µs.

Eine Unterbrechung des Echtzeitverhaltens beispielsweise durch Software mit einer höheren Priorität und/oder Hardware-Interrupts (insbesondere sogenannte System-Management-Interrupts), führen zu einem "Blackout" des Echtzeitbetriebssystems. Das Zeitsystem des Echtzeitbetriebssystems wird dann vollständig angehalten. Nach dem unterbrechenden Ereignis läuft die Zeit des Echtzeitbetriebssystem weiter, als hätte keine Unterbrechung stattgefunden. Damit können Reaktionszeiten nicht eingehalten werden. Diese Überschreitung wird außerdem systemseitig nicht erkannt.

Bereits heute sind System-Management-Interrupts (SMI, in der PC-Firmware realisierte höchstpriore Interrupts) ein großes Problem für Echtzeitbetriebssysteme. Solche Unterbrechungen werden firmwareseitig, beispielsweise bei bestimmten Temperaturen im Prozessor (Übertemperatur, Schwelltemperaturen) oder aber auch durch PC-Funktionstasten (wie Bildschirmumschaltung, Lautstärkeanpassung, Helligkeitsänderung) ausgelöst. Auch über die USB-Schnittstelle können SMIs ausgelöst werden. Die Dauer von SMIs kann von wenigen Millisekunden bis teilweise mehr als 200ms betragen. Echtzeitbetriebssysteme können solche Unterbrechungen nicht abfangen und verlieren damit ihre Echtzeitfähigkeit. Der Anwender merkt dies wahrscheinlich erst, wenn die Steuerung "Aussetzer" hat und es zu Produktionsausfällen kommt.

### Stand der Technik

Aus der US 2007/0245054 A1 ist bereits ein Verfahren zur Überprüfung des Echtzeitverhaltens bekannt, welches mittels einer Echtzeit-Systemuhr (Real Time Clock) periodische Interrupts erzeugt.
Die DE 101 40 675 A1 beschreibt ein Echtzeit-Betriebssystemkern mit einem permanent aktiven Zeiplaner (Scheduler), wobei der Arbeitszyklus in Zeitscheiben unterteilt ist und pro Zeitscheibe immer nur eine Aufgabe angestoßen werden kann.

Unterbrechungen des Echtzeitbetriebssystems, die zu einem der oben beschriebenen Blackouts führen, wie beispielsweise ein SMI oder ein Prozess (außerhalb des Echtzeitbetriebssystems), der mit höherer Priorität die CPU bzw. die Systemressourcen nutzt, werden durch die bekannten Echtzeitbetriebssysteme derzeit nicht erkannt.

Aufgabe der Erfindung ist es, eine Lösung für die oben genannten Probleme und eine Möglichkeit anzugeben zur Überprüfung des Verhaltens eines Echtzeitbetriebssystems.

### Darstellung der Erfindung

Diese Aufgabe wird gelöst durch Verfahren gemäß Patentanspruch 1. Das Verfahren überprüft das Echtzeitverhaltens eines Betriebssystems, mit einem ersten, für das Echtzeitverhalten des Betriebssystems zuständigen, Zeitsystem (Echtzeiterweiterung SMI-Tracer) indem eine Überprüfungsroutine periodisch zur Ausführung aufgerufen wird und der tatsächliche Ausführungszeitpunkt der Überprüfungsroutine mit einem erwar teten periodischen Ausführungszeitpunkt der Überprüfungsroutine verglichen wird.

Abhängig von dem geforderten Echtzeitverhalten wird im Echtzeitbetriebssystem eine Routine zyklisch aufgerufen. Das Aufrufintervall entspricht mindestens dem geforderten Echtzeitverhalten. Über einen Hardwaretimer (hierzu kann z. B. der im PC-System vorhandene Time-Stamp-Counter TSC verwendet werden) findet eine Überprüfung des Aufrufintervalls statt.

Besonders vorteilhafte Ausgestaltungen sind in den Unteransprüchen angegeben.

Weicht das Aufrufintervall der Routine vom Soll-Wert ab, dann kann dies entsprechend aufgezeichnet werden (z. B. das aktuelle Aufrufintervall und ein Zeitstempel, wann die Abweichung aufgetreten ist). Abweichungen vom Echtzeitverhalten, z. B. aufgrund eines System Management Interrupt SMI, können so erfasst werden und eine entsprechende Reaktion kann gegebenenfalls folgen.
Mögliche Reaktionen sind (Aufzählung ist nicht abschließend):
- Warnmeldung und/oder
- Stopp der Steuerung und/oder
- Erfassen von SMI Unterbrechungs- Zeitpunkt und Dauer und
- Berücksichtigung beim Systemverhalten.

Die Überprüfung der Echtzeitfähigkeit von vorgeblich echtzeitfähigen Systemen hat verschiedene Vorteile. Eine kontinuierliche Überprüfung und ggf. Aufzeichnung der Echtzeitfähigkeit eines Systems kann unabhängig vom verwendeten Echtzeitbetriebssystem durchgeführt werden.

### Beschreibung der bevorzugten Ausgestaltungsformen

### Kurzbeschreibung der Zeichnungen

Im Folgenden wird die Erfindung anhand von Ausführungsbeispielen erläutert. Dabei zeigen
Figur 1 ein Ablaufdiagramm,
Figur 2 Beispiel für einen Ablauf mit SMI.

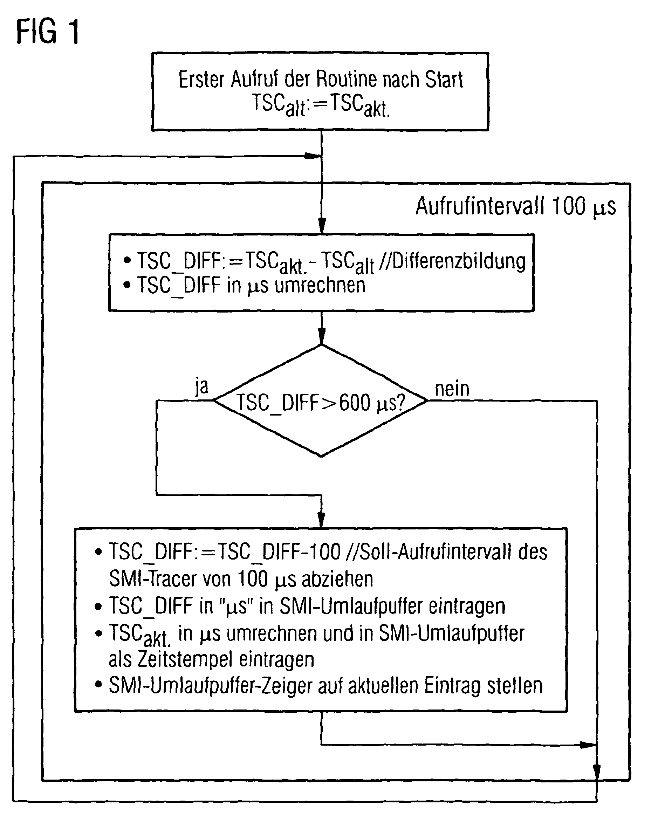

Figur 1 zeigt ein Ablaufdiagramm des erfindungsgemäßen Verfahrens für eine Realisierung als SMI-Tracer Routine inner-halb des Echtzeitbetriebssystems.

Zunächst wird die Routine initial aufgerufen. Dabei wird der Zeitcounter TSCₐₗₜ := TSCₐₖₜ neu festgelegt. Nun wird die Routine wiederholt aufgerufen, beispielsweise in einem Aufrufintervall von 100 µs. Andere Werte sind aber möglich. Dann wird eine Differenz berechnet TSC_DIFF := TSCₐₖₜ - TSCₐₗₜ.

Diese Differenz wird ggf. noch in eine andere Einheit (µs) umgerechnet. Sofern die Differenz einen zuvor bestimmten Grenzwert nicht überschreitet, in dem Beispiel 600 µs, wird keine weitere Handlung ausgeführt. Nach Ablauf des Aufrufintervalls wird die Routine erneut aufgerufen. Anderenfalls, wenn also der berechnete Wert den Grenzwert überschreitet, dann können zunächst verschiedene Handlungen ausgeführt werden. Beispielsweise kann die Abweichung in einem Speicher abgelegt und damit protokolliert werden, hierbei kann auch ein Zeitstempel mit gespeichert werden. Danach wird die Routine ebenfalls wieder ausgeführt.

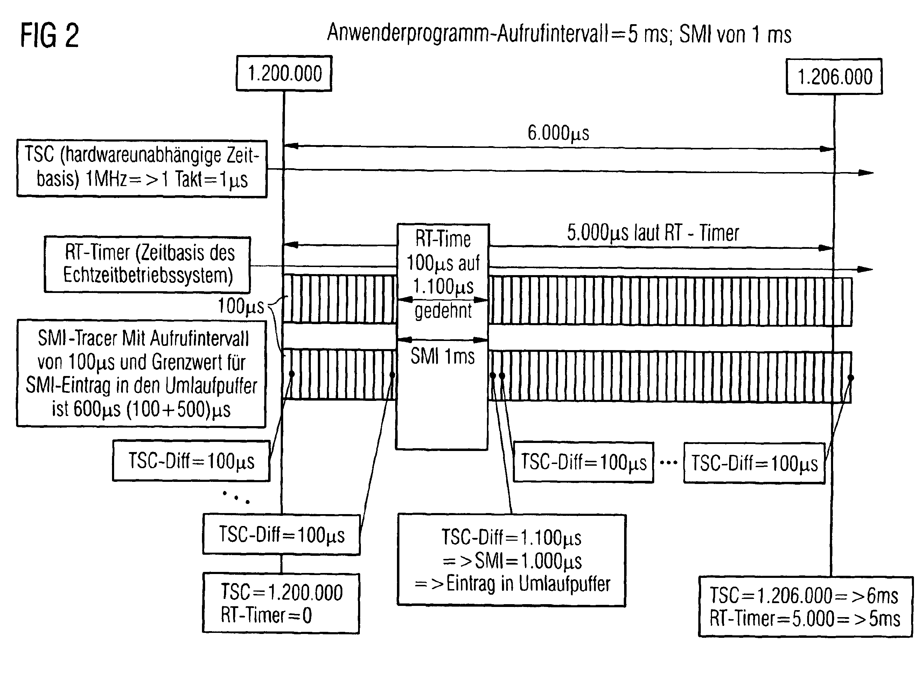

In Figur 2 ist jeweils die Erkennung eines SMI durch das erfindungsgemäße Verfahren dargestellt. Die abgebildeten Zeitbasen sind beispielhaft. Der Realtime (RT)-Timer bildet die Zeitbasis des Echtzeitbetriebssystems. Der TSC wird direkt vom Prozessor gebildet und ist unabhängig von eventuellen Systemunterbrechungen, SMI.

Beispielhaft wird davon ausgegangen das, dass Anwenderprogramm-Aufrufintervall). Es tritt ein SMI von 1 ms auf. Dieser führt dazu, dass die Zeitbasis des Echtzeitbetriebssystems für die Dauer des SMIs aussetzt. Das reale Anwenderprogramm-Aufrufintervall verlängert sich dadurch auf 6 ms.

Durch die Überwachungsroutine "SMI-Tracer" kann dieses Verhalten nun erkannt und beherrscht werden. Dieser wird zyklisch alle 100 µs aufgerufen und über den unabhängigen Time Stamp Counter TSC das Aufrufintervall überwacht. In obigem Beispiel ergibt sich TSC-Differenz von 1100 µs (Dauer des SMI + Aufrufintervall). Auf Basis der erfassten Unterbrechung durch den SMI, kann dies steuerungsseitig berücksichtigt werden und das Vorhandensein von Unterbrechungen dem Anwender mitgeteilt oder entsprechend anderweitig reagiert werden.

## Patentansprüche

1. Verfahren zur Überprüfung des Echtzeitverhaltens eines Betriebssystems, mit einem ersten, für das Echtzeitverhalten des Betriebssystems zuständigen, Zeitsystem wobei
eine Überprüfungsroutine (SMI-Tracer) periodisch zur Ausführung aufgerufen wird **dadurch gekennzeichnet dass** der tatsächliche Ausführungszeitpunkt der Überprüfungsroutine mit einem erwarteten periodischen Ausführungszeitpunkt der Überprüfungsroutine verglichen wird.

2. Verfahren nach Patentanspruch 1, **dadurch gekennzeichnet, dass**
das zur Überprüfung ein zweites, unabhängiges Zeitsystem (TSC) verwendet wird.

3. Verfahren nach einem der vorherigen Patentansprüche, **dadurch gekennzeichnet, dass**
eine Differenz zwischen tatsächlichem Ausführungszeitpunkt und erwartetem Ausführungszeitpunkt berechnet wird, und sofern eine Differenz festgestellt wurde, diese aufgezeichnet wird.

4. Verfahren nach einem der vorherigen Patentansprüche, **dadurch gekennzeichnet, dass**
anhand der festgestellten oder aufgezeichneten Differenz oder Differenzen die Ursache der Abweichung ermittelt werden kann.

5. Verfahren nach einem der vorherigen Patentansprüche, **dadurch gekennzeichnet, dass**
anhand der festgestellten oder aufgezeichneten Differenz oder Differenzen eine Reaktion erfolgen kann.

6. Verfahren nach Patentanspruch 5, **dadurch gekennzeichnet, dass**
die Steuerung eine Warnmeldung abgibt.

7. Verfahren nach Patentanspruch 5, **dadurch gekennzeichnet, dass**
bei Feststellung einer Differenz die Steuerung angehalten wird.

8. Verfahren nach Patentanspruch 5, **dadurch gekennzeichnet, dass**
die Dauer der Störung ermittelt wird und eine Korrektur des Betriebssystemverhaltens durchgeführt wird.

## Claims

1. Method for checking the realtime behaviour of an operating system, which has a first time system responsible for the operating system's realtime behaviour,
wherein
a checking routine (SMI tracer) is periodically called up for execution **characterised in that**
the checking routine's actual execution instant is compared with an expected periodic execution instant of the checking routine.

2. Method according to claim 1, **characterised in that**
a second, independent time system (TSC) is used for checking.

3. Method according to one of the preceding claims,
**characterised in that**
a difference between the actual execution instant and expected execution instant is calculated and will be recorded if a difference is established.

4. Method according to one of the preceding claims,
**characterised in that**
the cause of the departure can be determined based on the established or recorded difference or differences.

5. Method according to one of the preceding claims,
**characterised in that**
a reaction can take place based on the established or recorded difference or differences.

6. Method according to claim 5, **characterised in that**
the control issues a warning message.

7. Method according to claim 5, **characterised in that**
the control will be halted if a difference is established.

8. Method according to claim 5, **characterised in that**
the duration of the trouble will be determined and the operating system's behaviour corrected.

## Revendications

1. Procédé de contrôle du comportement en temps réel d'un système d'exploitation, comprenant un premier système d'horloge responsable du comportement en temps réel du système d'exploitation, une routine de contrôle (indicateur SMI) étant périodiquement appelée à s'exécuter, **caractérisé en ce que** l'instant d'exécution réel de la routine de contrôle est comparé à un instant d'exécution périodique attendu de la routine de contrôle.

2. Procédé selon la revendication 1, **caractérisé en ce qu'**un second système d'horloge (TSC) indépendant est utilisé pour le contrôle.

3. Procédé selon l'une des revendications précédentes, **caractérisé en ce qu'**une différence entre l'instant d'exécution réel et l'instant d'exécution attendu est calculée et, si une différence a été constatée, elle est enregistrée.

4. Procédé selon l'une des revendications précédentes, **caractérisé en ce que** la cause de l'écart est déterminée en se basant sur la différence ou les différences constatées ou enregistrées.

5. Procédé selon l'une des revendications précédentes, **caractérisé en ce qu'**une réponse peut se produire à partir de la différence ou des différences constatées ou enregistrées.

6. Procédé selon la revendication 5, **caractérisé en ce que** la commande délivre un message d'avertissement.

7. Procédé selon la revendication 5, **caractérisé en ce que** la commande est arrêtée en cas de constat d'une différence.

8. Procédé selon la revendication 5, **caractérisé en ce que** la durée de la perturbation est déterminée et une correction du comportement du système d'exploitation est effectuée
